# DEMANDE DE BREVET EUROPEEN

(11) **EP 4 451 293 A1**
(43) Date de publication de la demande: **23.10.2024**
(21) Numéro de dépôt: 24169082.5
(22) Date de dépôt: 08.04.2024
(51) Int. Cl.: H01B 3/44, C08L 51/06, C08L 23/30, C08K 5/14, C08K 5/04

(54) **COUCHE DE POLYMÈRE RÉTICULÉ POUR DISPOSITIF ÉLECTRIQUE**

(30) Priorité: 11.04.2023 FR 2303594
(71) Demandeur: Nexans, 92400 Courbevoie (FR)
(72) Inventeur: LARCHE, Jean-François, 69250 Fleurieu-sur-Saône (FR); SLAWINSKI, Lucile, 69360 Ternay (FR); MULOT, Benjamin, 69100 Villeurbanne (FR)
(74) Mandataire: Ipsilon

(57) **Abrégé**

L'invention concerne un dispositif électrique comprenant une couche réticulée, où ladite couche est obtenue par réaction d'au moins les composés suivants:
(a) des chaînes polymères, identiques ou différentes, de préférence non élastomères, comprenant chacune au moins une fonction -COOH (et de préférence plusieurs) ; et
(b) des composés non polymères, identiques ou différents, contenant chacun au moins deux fonctions époxy.

## Description

### Domaine technique

La présente invention concerne le domaine des dispositifs électriques de type câbles électrique ou accessoires pour câbles électriques et qui comprenant une couche réticulée à base d'au moins un polymère.

Elle s'applique typiquement, mais non exclusivement, aux domaines des câbles d'énergie à basse tension (notamment inférieure à 6kV), à moyenne tension (notamment de 6 à 45-60 kV) ou à haute tension (notamment supérieur à 60 kV, et pouvant aller jusqu'à 800 kV), qu'ils soient à courant continu ou alternatif.

Les câbles d'énergie comprennent typiquement un conducteur électrique central, généralement au moins un élément conducteur électrique allongé de type fil ou toron de fils, et au moins une couche électriquement isolante entourant cet élément conducteur central. Cette couche électriquement isolante peut typiquement être une couche de polymère réticulé, notamment de polyéthylène réticulé. Différentes techniques de réticulation ont été décrites pour réaliser des couches isolantes de ce type, notamment des techniques employant des peroxydes, qu'on désigne souvent par le terme générique de « voie peroxyde ».

La voie peroxyde tend cependant de plus en plus à être évitée, du fait que les peroxydes employés conduisent à la formation de produits de décomposition qui présentent généralement des inconvénients lors de la fabrication du câble ou de l'accessoire et ont souvent un impact négatif sur leurs performances finales du câble. Les peroxydes usuels, tels que le peroxyde de dicumyle par exemple, se décomposent pour former des sous-produits incluant notamment du méthane, de l'acétophénone, de l'alcool cumylique, de l'acétone, du tertiobutanol, de l'alpha-méthyle styrène et/ou de l'eau, ce qui peut nuire aux propriétés finales de la couche isolante préparée.

Lorsqu'on emploie la voie peroxyde, il est préférable d'éliminer ces produits de décomposition. En particulier, si le méthane formé n'est pas évacué des couches réticulées, celui-ci fait courir des risques liés à son explosivité et à sa capacité à s'enflammer, lors de son stockage et son application finale. De ce fait, les câbles comprennent des couches réticulées issues de la voie peroxyde sont généralement soumis à une phase de dégazage à l'issue de leur préparation, qui interdit leur mise en service immédiate et alourdit leur procédé de fabrication et les coûts correspondants. Cette étape de dégazage peut être très longue (souvent plusieurs jours) et implique une gestion des sous-produits volatils de type méthane qui sont dégagés. Compte tenu de la longueur très importante d'un câble électrique, la quantité de produits de décomposition sont au final très important et ce d'autant plus que l'épaisseur de la couche réticulée augmente.

Certains produits de décomposition des peroxydes s'avèrent compliqués, voire impossibles, à éliminer dans la couche formée, ce qui peut nuire aux performances finales du câble, voire remettre en cause le caractère isolant de la couche réticulée. La formation d'eau par exemple est tout particulièrement insidieuse car elle s'effectue le plus souvent à partir de sous-produits non volatils de type alcool cumylique, et ce de façon relativement lente. Ainsi, elle peut se produire après plusieurs mois, voire quelques années, une fois que le câble est en configuration opérationnelle. Cette apparition progressive d'eau au sein de la couche à visée isolante augmente alors de façon significative les risques de claquage dans le câble à plus ou moins court terme.

D'autres voies que la voie peroxyde ont de ce fait été développées, qui visent à s'affranchir des difficultés liées aux produits de décomposition des peroxydes. Dans ce cadre, il a été notamment préconisé l'emploi de peroxydes spécifiques limitant la formation de ces produits de décomposition.

D'autres voies que la voie peroxyde ont également été explorées, notamment dans la demande de brevet WO 2014/195629 qui décrit une couche réticulée obtenue à partir d'une composition polymère comprenant au moins un polymère comprenant une fonction époxy et un agent de réticulation non polymère comprenant une fonction réactive apte à réagir avec cette fonction époxy.

Un but de la présente invention est de fournir une nouvelle voie d'accès à des couches réticulées pour câble électrique ou accessoire pour câble électrique, évitant la présence de sous-produits de réticulation tels que le méthane et l'eau, tout en obtenant de bonnes propriétés de réticulation adaptées à une utilisation au sein d'un câble ou accessoire pour câble.

A cet effet, la présente invention propose la mise en oeuvre d'un nouvelle voie de réticulation ne nécessitant pas la mise en oeuvre de peroxyde et mettant en oeuvre la réaction d'au moins un polymère porteur de fonctions -COOH et d'au moins un composé non polymère porteur d'au moins deux fonctions époxy.

Plus précisément, selon un premier aspect, la présente invention a pour objet un dispositif électrique comprenant une couche réticulée, où ladite couche est obtenue par réaction d'au moins les composés suivants:
(a) des chaînes polymères, identiques ou différentes, comprenant chacune au moins une fonction -COOH (et de préférence plusieurs) ; et
(b) des composés non polymères, identiques ou différents, contenant chacun au moins deux fonctions époxy.

Les chaînes polymères (a), à savoir les chaînes précitées qui comprennent chacune une ou plusieurs fonctions -COOH, sont de préférence non élastomères. Selon un mode particulier, la couche réticulée est telle qu'obtenue en faisant réagir les composés non polymères (b) avec des chaînes polymères non elastomères porteuses de groupement -COOH, et ce en l'absence de toute chaîne polymère elastomère porteuse de groupement -COOH, par exemple en faisant réagir les composé (b) avec des chaînes (a) non élastomères chacune porteuse d'une ou plusieurs fonctions -COOH, à l'exclusion de tout autre chaîne polymère.

Selon un second aspect, un autre objet de l'invention est un procédé de préparation d'un dispositif électrique comprenant une couche réticulée, comprenant une étape (e) de préparation de ladite couche réticulée, par application d'un mélange comprenant :
(a) des chaînes polymères, identiques ou différentes, de préférence non élastomères, comprenant chacune au moins une fonction -COOH (et de préférence plusieurs) ; et
(b) des composés non polymères, identiques ou différents, contenant chacun au moins deux fonctions époxy.

La réaction des fonctions COOH portées par les chaînes polymères (a) et des fonctions époxy portées par les composés (b) conduit à la création de ponts esters entre les polymères (a) et les composés (b). De plus, compte tenu de la présence spécifique d'au moins deux groupes époxy sur les composés (b), au moins deux ponts s'établissent entre un composé (b) donné et des chaînes polymère, ce qui conduit *in fine* à une solidarisation covalente des chaînes polymères (a) via le composé (b), à savoir par des liaisons de type -(pont ester)-[composé (b)]-(pont ester)- . Il en résulte une réticulation des chaînes polymères (a) entre elles, et donc la formation d'une composition polymère réticulée propre à former la couche réticulée recherchée.

Selon une première variante intéressante, l'étape (e) du procédé de l'invention comprend une première étape (e1) où une population de polymères P non réticulés et non porteurs de fonctions -COOH est soumise à une réaction de greffage par des groupements -COOH, ce par quoi on obtient une population de polymères greffés; puis une étape (e2) où les polymères greffés obtenus dans l'étape (e1) sont mis en contact avec les composés (b) selon l'invention. Selon ce mode particulier, l'invention peut être décrite comme permettant la préparation d'une couche polymère réticulée au départ de la composition de polymères P non réticulés, par greffage puis réaction avec un agent de couplage (composé b).

Les polymères P non réticulés mis en oeuvre dans l'étape (e1) peuvent avantageusement être choisis parmi les les homopolymères d'éthylène, les homopolymères de propylène, les copolymères d'éthylène (notamment avec des comonomères choisis parmi les oxydes d'éthylène et l'EVA, et les caoutchoucs L'étape de greffage (e1) peut être effectuée selon toute technique connue en soi permettant la solidarisation covalente de groupes -COOH sur les polymères P.

A titre d'exemple, selon un mode de réalisation intéressant, les polymères P non réticulés mis en oeuvre dans l'étape (e1) sont ou comprennent du polyéthylène non réticulé (PE). Dans ce cas, l'étape (e2) de greffage peut typiquement être effectuée par imprégnation des granulés de PE par l'acide acrylique et une très faible quantité de peroxyde. L'imprégnation se fait typiquement en plaçant d'abord pendant plusieurs heures les granulés de PE dans une étuve à une température inférieure à la fusion du PE et généralement supérieure à 20 °C, puis en ajoutant le peroxyde et l'acide acrylique, et enfin en laissant le mélange sous agitation pendant plusieurs heures à une température inférieure à la fusion des granulés et généralement supérieure à 20 °C. Ces étapes sont généralement suivies par une étape d'extrusion ou de mélange au sein d'un mélangeur interne.

Alternativement, selon un autre mode possible lorsque les polymères P non réticulés employés dans l'étape (e1) sont ou comprennent du PE, l'étape (e2) de greffage peut être effectuée sans mettre en oeuvre une imprégnation du type précité, mais en incorporant directement le mélange de PE, d'acide acrylique et de peroxyde dans le dispositif servant à l'étape de mélange (extrudeuse mono ou bi vis ou mélangeur interne par exemple). Ce mode de réalisation est notamment bien adapté dans le cas où le greffage met en oeuvre des composés qui se présentent sous forme solide.

Selon un autre mode de réalisation envisageable (compatible avec le précédent), la population de polymères P non réticulés mis en oeuvre dans l'étape (e1) sont ou comprennent un caoutchouc non réticulé, notamment un caoutchouc. Dans ce cas, l'étape (e2) de greffage peut typiquement être effectuée par imprégnation du caoutchouc par de l'acide acrylique et une très faible quantité de peroxyde. L'imprégnation se fait typiquement dans une étuve, dans laquelle on ajoute le peroxyde et l'acide acrylique, et enfin en laissant le mélange sous agitation pendant plusieurs heures. Ces étapes sont généralement suivies de mélange au sein d'un mélangeur interne.

Selon une autre variante, l'étape (e) du procédé de l'invention peut être conduite sur des polymères (a), de préférence non elastomères, porteurs de fonctions -COOH dès l'issue de leur synthèse. Dans ce cadre, l'étape (e) peut par exemple être conduite sur des polymères ou copolymère issu de la polymérisation de monomères comprenant des monomères porteurs de fonction -COOH, par exemple des homopolymères ou, le plus souvent, des copolymères issus de la polymérisation de monomères éthyléniquement insaturés, incluant des monomères choisis par exemple parmi l'acide acrylique ou l'acide méthacrylique ou l'acide itaconique, l'acide acrylique étant préféré.

Quel que soit son mode exact de mise en oeuvre, l'invention permet l'obtention d'une couche réticulée sans avoir à employer un peroxyde organique, tout en garantissant néanmoins un haut niveau de réticulation. La mise en oeuvre d'un peroxyde additionnel dans le cadre de l'invention n'est pas exclue dans l'absolu (et elle est même avantageuse pour réaliser le greffage), mais il est avantageux que la réaction des fonctions COOH portées par les chaînes polymères (a) et des fonctions époxy portées par les composés (b) selon l'invention s'opère en l'absence de tout peroxyde, ou à tout le moins dans les teneurs restant inférieures à 0,5%, typiquement inférieures à 0,4%, par exemple entre 0,1% et 0,4%

En outre, le procédé de préparation de la couche réticulée selon l'invention présente l'avantage d'être économique, facile à mettre en oeuvre, et il ne nécessite pas de recourir à des procédés contraignants de dégazage.

L'invention permet par ailleurs d'obtenir des couches réticulées bien adaptées à une mise en oeuvre à titre de couche isolante dans un dispositif électrique. Les couches réticulées selon l'invention présentent notamment une très bonne résistance au claquage selon la norme IEC 62539 ou une très bonne résistivité électrique selon la norme IEC 60840, et une température de réticulation de la composition polymère relativement basse (généralement inférieure à 300°C, et de préférence inférieure ou égale à 250°C), par exemple de l'ordre de 200°C [

Différents aspects et mode de réalisation particulier de l'invention sont décrits plus en détails ci-après.

### LES CHAINES POLYMERES (a)

De façon à obtenir une réticulation de la couche la plus effective possible, les chaînes polymère (a) porteuses de fonctions -COOH qui sont mises en oeuvre selon l'invention comprennent avantageusement au moins 0.1% en poids, et de préférence au moins 0.5% en poids de fonctions -COOH, par rapport au poids total des chaînes polymères (a). Toutefois, cette proportion n'a pas à dépasser 10 % en poids et elle peut par exemple être comprise entre 1 et 5 % en masse

Les chaînes polymères (a) peuvent être des chaînes comprenant au moins une fonction -COOH greffées de façon covalente sur une chaîne polymère (obtenues par post-greffage sur un squelette polymère) et/ou des chaînes homo- ou co-polymères issues d'une polymérisation de monomères incluant des monomères porteurs de fonctions -COOH, comme par exemple un copolymère d'éthylène et d'acide acrylique

Les chaînes polymères (a) de l'invention peuvent être mises en contact avec les composés (b) sous la forme d'une composition polymère comprenant un mélange de chaînes polymères dont une partie seulement est constituée par les chaînes polymère (a), le reste de la composition comprenant d'autres chaînes polymères, non porteuses de groupement -COOH. Dans ce cas, les chaînes (a) porteuses de groupements -COOH constituent avantageusement au moins 50% en masse, de préférence au moins 70% en masse , et plus préférentiellement au moins 90% en masse par rapport à la masse totale des chaînes polymères présentes dans la composition polymère

Les chaînes polymères (a) sont avantageusement des polymères adaptés à une mise en forme par extrusion, ce qui facilite l'application de la couche réticulée.

De préférence, les chaînes polymères (a) comprennent (voire sont uniquement) des polyoléfines. Par « polyoléfine » on entend ici un copolymère ou homopolymère d'oléfine, de préférence d'oléfine non cyclique. Avantageusement, les chaînes polymères (a) comprennent un homo- ou co-polymère d'éthylène ou homo- ou copolymère de propylène. Selon un mode de réalisation particulier, les chaînes polymères (a) porteuses de fonctions -COOH qui sont employées selon l'invention sont toutes des chaînes polymères non élastomères. Ces chaînes polymères (a) non élastomères porteuses de fonctions -COOH peuvent notamment être des chaînes de polyoléfines porteuses de fonctions -COOH, notamment de polyétylène porteur de fonctions -COOH.

### LE COMPOSE (b)

Un composé(b) employé selon l'invention est un composé spécifiquement porteur d'au moins deux fonctions époxy, de façon à assurer une réticulation entre les chaînes polymères. Un composé (b) est par ailleurs un composé non polymère, qui n'est donc notamment pas issu de l'enchaînement covalent de motifs monomères identiques ou différents.

Les fonctions époxy des composés (b) employés selon l'invention sont des fonctions contenant un atome d'oxygène pontant deux atomes de carbone voisins et liés, ce qui fait des composés (b) des membres particuliers de la famille des époxydes (dits aussi oxaycloalcanes ou oxiranes). Les composés (b) sont spécifiquement porteurs d'au moins deux fonctions époxy, et sont donc plus précisément des diépoxydes ou des multiépoxydes non polymères.

Les composés (b) peuvent avantageusement être porteurs d'au moins deux groupements d'ester de glycidyle. A titre non limitatif de composé (b), on peut par exemple citer le le 1,4-butanediol diglycidyl ether

Quelle que soit la nature exacte des polymères (a) et des composés (b), on préfère mettre en oeuvre ces composés avec un rapport molaire epoxy/COOH, correspondant à la quantité totale de groupes époxy porté par les composés (b)rapporté à la quantité de groupes COOH portés par les chaînes polymères (a) soit compris entre 0,2 et 2, par exemple entre 0,3 et 1, notamment entre 0,4 et 0,8. [

Par ailleurs, il est en général préférable que le rapport massique (b)/(a), calculé par le rapport la masse totale des composés (b) introduits, rapportée à la masse totale de chaînes polymères (a) introduites soit compris entre 0,1% et 15%, préférentiellement entre 0,5 et 10%, et par exemple entre 2 et 7%

### CATALYSEUR DE RETICULATION

Selon un mode intéressant, la réaction des polymères (a) et des polymères (b) peut être catalysée par la présence d'un catalyseur ou d'un promoteur de la réaction des groupes -COOH et des groupes époxy. Le cas échéant, ce catalyseur ou promoteur peut être une base choisie par exemple parmi les imidazoles et les amines tertiaires, un composé onium, un sel métallique ; ou un acide de Lewis

### AUTRES COMPOSES POTENTIELLEMENT PRESENTS DANS LA COUCHE RETICULEE

La réaction des polymères (a) et des composés (b) opérée selon l'invention peut avantageusement être conduite en présence de composés additionnels, le plus souvent mélangés au préalable avec les polymères (b) avant réaction avec le composé (b).

Les polymères (a) et composés (b) peuvent par exemple réagir en présence d'un ou plusieurs des composés suivants qui se retrouveront au final dans la couche réticulée :

### CHARGES (optionnelles)

Les composés (a) et (b) peuvent réagir en présence d'une charge qui peut être minérale ou organique. Cette charge peut être choisie parmi une charge ignifugeante et une charge inerte (ou charge non combustible).

A titre d'exemple, la charge ignifugeante peut être une charge hydratée, choisie notamment parmi les hydroxydes métalliques tels que par exemple le dihydroxyde de magnésium (MDH) ou le trihydroxyde d'aluminium (ATH).

La charge inerte peut être, quant à elle, de la craie, du talc, de l'argile (kaolin par exemple), ou du noir de carbone.

Le noir de carbone pourra être préféré pour obtenir une couche réticulée semi-conductrice, et pourra être introduit dans la composition polymère en une quantité suffisante pour rendre la composition semi-conductrice.

Le cas échéant, la charge pourra être employée à hauteur d'au moins 20 parties en poids (de préférence au moins 30 parties en poids, par exemple entre 40 et 100 parties en poids) de charge pour 100 parties en poids de polymère (a).

L'ajout d'une charge telle que décrite dans l'invention peut entraîner une élévation de température lors de la mise en oeuvre de la composition polymère, et de ce fait induire une réticulation prématurée de la composition polymère. Ainsi, pour éviter toute réticulation prématurée de la composition polymère, il est préférable que l'ajout de la charge soit réalisé de façon à ce qu'il n'y ait pas de réticulation prématurée de la composition polymère lors de sa mise en oeuvre. Plus particulièrement, l'agent de réticulation peut être avantageusement ajouté à la composition polymère dans une étape distincte et postérieure à celle de l'ajout de la charge.

### ADDITIFS (optionnels)

Les composés (a) et (b) peuvent réagir en présence d'additifs, qui sont alors présents de préférence à raison de moins de 25 parties en poids d'additifs, par exemple entre 1 et 20 parties en poids d'additifs par rapport au poids des polymères (a).

Ces additifs peuvent notamment être des agents de protection (antioxydants, des anti-UV, anti-cuivre), des agents de mise en oeuvre (plastifiants ou lubrifiants), et des pigments.

Selon une autre caractéristique de l'invention, et afin de garantir un dispositif électrique dit HFFR pour l'anglicisme « Halogen-Free Flame Retardant », le dispositif électrique, ou en d'autres termes les éléments qui composent ledit dispositif électrique, ne comprend/comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ... etc.

### LE DISPOSITIF ELECTRIQUE

Le dispositif électrique comprenant la couche réticulée selon l'invention peut notamment être :
- un câble électrique comprenant au moins un élément électriquement conducteur allongé, entouré par ladite couche réticulée, cette couche pouvant par exemple être une couche isolante ou une gaine extérieure ; ou
- un accessoire pour câble électrique, ledit accessoire comprenant ladite couche réticulée. Un accessoire de ce type est plus particulièrement destiné à être associé à au moins un câble électrique, ladite couche réticulée étant alors destinée à entourer au moins une extrémité d'un câble électrique. Un accessoire de ce type peut être notamment une jonction ou une terminaison.

### COUCHE RETICULEE EMPLOYEE A TITRE DE COUCHE ISOLANTE

Selon un mode de réalisation intéressant, la couche réticulée de l'invention peut être une couche électriquement isolante. Elle présente alors de préférence une conductivité électrique d'au plus 1.10⁻⁹ S/m (siemens par mètre) à 25°C.

### COUCHE RETICULEE EMPLOYEE A TITRE DE COUCHE SEMI-CONDUCTRICE

Selon un deuxième mode de réalisation, la couche réticulée de l'invention peut être une couche semi-conductrice.

Dans ce cas, la composition polymère de l'invention comprend en outre une charge électriquement conductrice en une quantité suffisante pour rendre la composition polymère semi-conductrice. On peut citer par exemple comme charge électriquement conductrice du noir de carbone.

On entend ici par « couche semi-conductrice » une couche dont la conductivité électrique est d'au moins 1.10⁻⁹ S/m (siemens par mètre), de préférence d'au moins 1.10⁻³ S/m, et en général inférieure à 1.10³ S/m (à 25°C).

### STRUCTURES POSSIBLES POUR UN CABLE SELON L'INVENTION

Selon un premier mode de réalisation possible, la couche réticulée de l'invention peut être employée dans un câble électrique à titre de couche isolante directement en contact physique avec un élément électriquement conducteur allongé. On parle dans ce cas notamment de câble basse tension.

La composition polymère utilisée pour former un tel câble basse tension comprend préférentiellement au moins une charge, telle que définie plus haut dans la présente description

Selon un autre mode de réalisation possible, le dispositif électrique de l'invention est un câble électrique qui comprend une première couche semi-conductrice entourant un élément électriquement conducteur allongé, une couche électriquement isolante entourant ladite première couche semi-conductrice, et une deuxième couche semi-conductrice entourant ladite couche électriquement isolante, et où la couche réticulée de l'invention est au moins l'une de ces trois couches, de préférence au moins deux desdites trois couches, et de préférence lesdites trois couches. On parle dans ce cas de câble moyenne ou haute tension.

Selon la présente invention, l'élément électriquement conducteur allongé du câble électrique peut être un fil métallique ou une pluralité de fils métalliques, torsadé(s) ou non, notamment en cuivre ou en aluminium, ou un de leurs alliages.

### STRUCTURES POSSIBLES POUR UN ACCESOIRESELON L'INVENTION

Lorsque le dispositif électrique de l'invention est un accessoire pour câble électrique, ledit accessoire entoure avantageusement au moins une extrémité d'un câble électrique, ladite extrémité étant celle qui est destinée à être associée audit accessoire.

L'accessoire peut être typiquement un corps longitudinal creux, tel que par exemple une jonction ou une terminaison pour câble électrique, dans lequel au moins une partie d'un câble électrique est destinée à être positionnée.

L'accessoire comporte au moins un élément semi-conducteur et au moins un élément électriquement isolant, ces éléments étant destinés à entourer une extrémité d'un câble électrique. L'élément semi-conducteur est bien connu pour contrôler la géométrie du champ électrique, lorsque le câble électrique, associé audit accessoire, est sous tension.

La couche réticulée de l'invention peut être ledit élément semi-conducteur et/ou ledit élément électriquement isolant.

Lorsque l'accessoire est une jonction, cette dernière permet de connecter ensemble deux câbles électriques, la jonction entourant alors en partie ces deux câbles électriques. Plus particulièrement, l'extrémité de chaque câble électrique destiné à être connecté est positionnée à l'intérieur de ladite jonction.

### MISE EN PLACE DE LA COUCHE RETICULEE SELON L'INVENTION

La couche réticulée de l'invention peut être une couche extrudée ou une couche moulée, qui peut notamment être obtenue par des procédés d'extrusion ou de moulage bien connus de l'homme du métier. Lorsque le dispositif électrique est un câble électrique, la couche réticulée est de préférence une couche extrudée. Lorsque le dispositif électrique est un accessoire pour câble électrique, la couche réticulée est de préférence une couche moulée.

Le processus de réticulation, impliquant la réaction des chaînes polymères(a) et des composés (b), a en général lieu pendant ou postérieurement à l'application de la couche extrudée, notamment pendant ou immédiatement après l'extrusion ou le moulage précités.

Selon un mode de réalisation notamment bien adapté à la fabrication d'un câble électrique, le mélanges des polymères (a) et des composés (b) est extrudé autour d'un élément conducteur allongé de façon à obtenir une couche extrudée (directement en contact physique ou non avec ledit élément électriquement conducteur) où a lieu une réticulation selon l'invention (réaction des polymères (a) et des composés (b)) qui conduit à la formation d'une couche réticulée selon l'invention, cette réticulation s'opérant de préférence après l'étape d'extrusion.

L'extrusion peut être réalisée selon des techniques bien connues en soi, notamment au moyen d'une extrudeuse. De préférence, on évite au maximum les phénomènes de réticulation au sein de l'extrudeuse et, pour ce fait, on évite autant que possible de dépasser la température induisant l'ouverture des fonctions époxy portées par les composés (b). Typiquement, la température de mise en oeuvre par extrusion est inférieure à 200°C, et de préférence inférieure à 150°C. Dans ces conditions, on obtient en sortie d'extrudeuse une couche extrudée autour dudit élément électriquement conducteur qui est sensiblement non réticulée (avec typiquement un taux de gel selon la norme ASTM D2765-01 de moins de 20%, de préférence de moins de 10%, voire de moins de 5%.

Les différents composés présents dans la composition extrudée (polymères (a) et composé (b) et éventuelles charges ou additifs) peuvent typiquement être mélangés en amont de l'extrudeuse, notamment avec le polymère à l'état fondu, afin d'obtenir un mélange homogène. La température au sein du mélangeur est alors de préférence suffisamment élevée pour obtenir un polymère à l'état fondu, mais suffisamment faible néanmoins pour éviter sensiblement la réticulation en amont et dans l'extrudeuse.

Suite à l'application de la couche sensiblement réticulée par extrusion, la réticulation peut notamment être obtenue en élevant la température de la couche appliquée au-delà de la température d'ouverture des fonctions epoxy, ce qui induit la réticulation recherchée au sein de la couche appliquée.

Selon un mode de réalisation bien adapté à la fabrication d'un accessoire pour câble électrique, le mélanges des polymères (a) et des composés (b) est moulé de façon à obtenir une couche moulée où a lieu une réticulation selon l'invention qui conduit à la formation d'une couche réticulée selon l'invention, cette réticulation pouvant s'opérer pendant ou après l'étape de moulage.

Là encore , les différents composés présents dans la composition extrudée (polymères (a) et composé (b) et éventuelles charges ou additifs) peuvent typiquement être mélangés en amont de l'étape de moulage, notamment avec le polymère à l'état fondu, afin d'obtenir un mélange homogène. La température au sein du mélangeur est alors de préférence suffisamment élevée pour obtenir un polymère à l'état fondu, mais suffisamment faible néanmoins pour éviter sensiblement la réticulation.

Selon un premier mode de réalisation, le moulage peut avoir lieu dans un moule porté à une température suffisamment élevée pour obtenir un polymère à l'état fondu, mais suffisamment faible néanmoins pour éviter sensiblement la réticulation. Dans ce cas, le moulage est ensuite suivie par une étape de traitement thermique de la couche appliquée par moulage, en élevant la température de ladite couche au-delà de la température d'ouverture des fonctions epoxy, ce qui induit la réticulation recherchée.

Selon un autre mode généralement plus intéressant, le moulage peut-être effectué à une température suffisamment élevée pour obtenir un polymère à l'état fondu et pour induire la réticulation, ce par quoi on obtient la couche réticulée souhaitée directement à l'issue du moulage.

L'invention sera encore davantage illustrée par les Figures en Annexe et l'exemple illustratif ci-après.
[FIG. 1] La **Figure 1** représente une vue schématique en coupe transversale d'un câble électrique selon un mode de réalisation conforme à l'invention.
[FIG. 2] La **Figure 2** représente une vue schématique d'un dispositif selon l'invention, comprenant une jonction en coupe longitudinale, cette jonction entourant l'extrémité de deux câbles électriques.
[FIG. 3] La **Figure 3** représente une vue schématique d'un dispositif selon l'invention, comprenant une terminaison en coupe longitudinale, cette terminaison entourant l'extrémité d'un unique câble électrique.

Pour des raisons de clarté, seuls les éléments essentiels pour la compréhension de l'invention ont été représentés de manière schématique, et ceci sans respect de l'échelle.

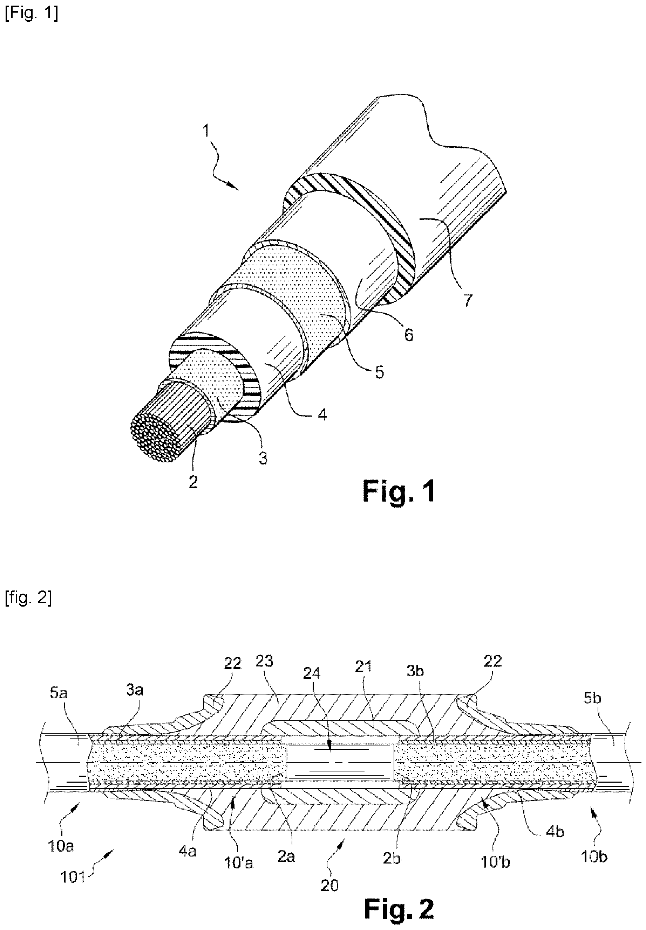

La Figure 1 représente un e câble d'énergie 1 à moyenne ou haute tension, qui comporte un élément conducteur 2 central allongé, notamment en cuivre ou en aluminium. Le câble d'énergie 1 comprend en outre plusieurs couches disposées successivement et coaxialement autour de cet élément conducteur 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche extrudée et réticulée, obtenue à partir de la composition polymère selon l'invention.

Les couches semi-conductrices sont également des couches extrudées et réticulées, pouvant être obtenues à partir de la composition polymère selon l'invention.

La présence de l'écran métallique 6 et de la gaine extérieure de protection 7 est préférentielle, mais non essentielle, cette structure de câble étant en tant que telle bien connue de l'homme du métier.

La Figure 2 représente un dispositif 101 comprenant une jonction 20 entourant en partie deux câbles électriques 10a et 10b.

Plus particulièrement, les câbles électriques 10a et 10b comprennent respectivement une extrémité 10'a et 10'b, destinées à être entourées par la jonction 20.

Le corps de la jonction 20 comporte un premier élément semi-conducteur 21 et un second élément semi-conducteur 22, séparés par un élément électriquement isolant 23, lesdits éléments semi-conducteur 21, 22 et ledit élément électriquement isolant 23 entourent les extrémités 10'a et 10'b respectivement des câbles électriques 10a et 10b.

Cette jonction 20 permet de connecter électriquement le premier câble 10a au second câble 10b, notamment grâce à un connecteur électrique 24 disposé au centre de la jonction 20.

Au moins un des éléments choisis parmi le premier élément semi-conducteur 21, le second élément semi-conducteur 22 et ledit élément électriquement isolant 23, peut être une couche réticulée telle que décrite dans l'invention.

Le premier câble électrique 10a comprend un conducteur électrique 2a entouré par une première couche semi-conductrice 3a, une couche électriquement isolante 4a entourant la première couche semi-conductrice 3a, et une seconde couche semi-conductrice 5a entourant la couche électriquement isolante 4a.

Le second câble électrique 10b comprend un conducteur électrique 2b entouré par au moins une première couche semi-conductrice 3b, une couche électriquement isolante 4b entourant la première couche semi-conductrice 3b, et une seconde couche semi-conductrice 5b entourant la couche électriquement isolante 4b.

Ces câbles électriques 10a et 10b peuvent être ceux décrits dans la présente invention.

A ladite extrémité 10'a, 10'b de chaque câble électrique 10a, 10b, la seconde couche semi-conductrice 5a, 5b est au moins partiellement dénudée afin que la couche électriquement isolante 4a, 4b soit au moins partiellement positionnée à l'intérieur de la jonction 20, sans être recouverte de la seconde couche semi-conductrice 5a, 5b du câble.

A l'intérieur de la jonction 20, les couches électriquement isolantes 4a, 4b sont directement en contact physique avec l'élément électriquement isolant 23 et le premier élément semi-conducteur 21 de la jonction 20. Les deuxièmes couches semi-conductrices 5a, 5b sont directement en contact physique avec le second élément semi-conducteur 22 de la jonction 20.

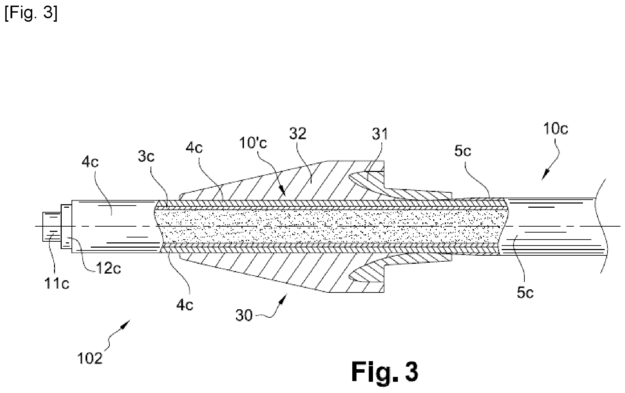

La figure 3 représente un dispositif 102 comprenant une terminaison 30 entourant un unique câble électrique 10c.

Plus particulièrement, le câble électrique 10c comprend une extrémité 10'c, destinée à être entourée par la terminaison 30.

Le corps de la terminaison 30 comporte un élément semi-conducteur 31 et un élément électriquement isolant 32, ledit élément semi-conducteur 31 et ledit élément électriquement isolant 32 entourent l'extrémité 10'c du câble électrique 10c.

Au moins un des éléments choisi parmi l'élément semi-conducteur 31 et l'élément électriquement isolant 32 peut être une couche réticulée telle que décrite dans l'invention.

Le câble électrique 10c comprend un conducteur électrique 2c entouré par une première couche semi-conductrice 3c, une couche électriquement isolante 4c entourant la première couche semi-conductrice 3c, et une seconde couche semi-conductrice 5c entourant la couche électriquement isolante 4c.

Ce câble électrique 10c peut être celui décrit dans la présente invention.

A ladite extrémité 10'c du câble électrique 10c, la seconde couche semi-conductrice 5c est au moins partiellement dénudée afin que la couche électriquement isolante 4c soit au moins partiellement positionnée à l'intérieur de la terminaison 30, sans être recouverte de la seconde couche semi-conductrice 5c du câble.

A l'intérieur de la terminaison 30, la couche électriquement isolante 4c, est directement en contact physique avec l'élément électriquement isolant 32 de la terminaison 30. La deuxième couche semi-conductrice 5c est directement en contact physique avec l'élément semi-conducteur 31 de la jonction 30.

### EXEMPLES

### EXEMPLE1

### Etape 1 : Greffage d'acide acrylique sur un PE:

100 g d'un polyéthylène (LDPE MFI 2), 0,25 g d'un peroxyde (Dicmuyl peroxyde) et 3 g d'acide acrylique à greffer ont été placés dans un récipient en verre. Le mélange obtenu a été agité à 60 °C pour faciliter l'imprégnation des molécules dans le polymère jusqu'à absorption complète des liquides par les granulés

Le mélange a alors été placé dans un mélangeur interne à 200 °C, puis mélangé à cette température pendant une durée de 5 minutes après la fusion de ce dernier.

Un échantillon a été prélevé et mise en forme de film fin puis lavé au tétrahydrofurane. Une analyse IRTF a permis de mettre en évidence la présence d'acide acrylique greffé grâce à la définition d'un pic à 1729 cm⁻¹.

### Etape 2 : Réticulation par un époxy:

Le polymère greffé obtenu dans l'étape 1 a été placé dans un mélangeur interne à une température supérieure à sa fusion, un catalyseur a été introduit, puis une quantité de 1,4-butanediol diglycidyl ether respectant un ratio molaire de 0,5 entre les fonctions époxy et acide a été ajouté. La durée de mélange est d'environ 5 minutes. Le mélange a ensuite été placé sous presse à une température et durée déterminées expérimentalement par une mesure de rhéologie pour permettre la réaction des fonctions époxy sur les fonctions acide carboxylique.

### EXEMPLE 2

Exemple de réticulation d'un copolymère acide acrylique - polyéthylène contenant 6,5 % de fonction acide acrylique MFI 9

Dans un mélangeur interne, a été introduit à 100 °C, 100 g du copolymère tel qu'obtenu dans l'étape 1 de l'exemple précédent

Après la fusion de ce copolymère , les éléments suivants sont ajoutés dans le mélangeur à 100 °C :
- Le catalyseur 2-Ethylimidazole, avec un rapport de 2 % molaire par rapport au fonctions acide carboxylique présentes dans le polymère.
L'époxy : 1,4-butanediol diglycidyl ether avec un ratio molaire du nombre de fonctions époxy au nombre de fonctions acide carboxylique de 0,5 :1.

Une fois l'ensemble de ces composés introduits, 5 minutes de mélangeage supplémentaire sont nécessaires. Aucune hausse de couple n'a été observé à cette température.

Une fois l'incorporation effectuée, la réticulation a été réalisée sous presse à 190 °C pendant 12 minutes.

Une mesure d'allongement à chaud a été réalisée selon la norme IEC 60811-507 afin de valider la réticulation. Dans ces conditions de réticulation, l'allongement à chaud a atteint 15 % et à froid l'allongement est de 0 %. Ainsi le matériau est conforme avec les exigences de la norme

## Revendications

1. Dispositif électrique comprenant une couche réticulée, où ladite couche est obtenue par réaction d'au moins les composés suivants :
(a) des chaînes polymères, identiques ou différentes, de préférence non élastomères, comprenant chacune au moins une fonction -COOH ; et
(b) des composés non polymères, identiques ou différents, contenant chacun au moins deux fonctions époxy.

2. Dispositif électrique selon la revendication 1, qui est un câble électrique comprenant au moins un élément électriquement conducteur allongé, entouré par ladite couche réticulée, cette couche pouvant par exemple être une couche isolante ou une gaine extérieure.

3. Dispositif électrique selon la revendication 1, qui est un accessoire pour câble électrique, notamment une jonction ou une terminaison, ledit accessoire comprenant ladite couche réticulée, de préférence destinée à être associé à au moins un câble électrique, et à entourer au moins une extrémité dudit câble électrique.

4. Dispositif électrique selon l'une des revendications 1 à 3, où la couche réticulée est une couche électriquement isolante.

5. Dispositif électrique selon l'une des revendications 1 à 3, où la couche réticulée est une couche semi-conductrice.

6. Procédé de préparation d'un dispositif électrique comprenant une couche réticulée, comprenant une étape (e) de préparation de ladite couche réticulée, par application d'un mélange comprenant :
(a) des chaînes polymères, identiques ou différentes, de préférence non élastomères, comprenant chacune au moins une fonction -COOH (et de préférence plusieurs) ; et
(b) des composés non polymères, identiques ou différents, contenant chacun au moins deux fonctions époxy.

7. Procédé selon la revendication 6 où l'étape (e) comprend :
une étape (e1) où une population de polymères P non réticulés et non porteurs de fonctions -COOH est soumise à une réaction de greffage par des groupements - COOH, ce par quoi on obtient une population de polymères greffés; puis une étape (e2) où les polymères greffés obtenus dans l'étape (e1) sont mis en contact avec les composés (b)

8. Procédé selon la revendication 7 où les polymères P non réticulés mis en oeuvre dans l'étape (e1) sont ou comprennent du polyéthylène non réticulé

9. Procédé selon la revendication 7 ou 8, où les polymères P non réticulés mis en oeuvre dans l'étape (e1) sont ou comprennent un caoutchouc non réticulé

10. Procédé selon la revendication 6 où l'étape (e) est conduite sur des polymères (a), de préférence non élastomères, issus de la polymérisation de monomères comprenant des monomères porteurs de fonction -COOH.
